# EUROPÄISCHE PATENTANMELDUNG

(11) **EP 2 110 520 A2**
(43) Veröffentlichungstag der Anmeldung: **21.10.2009**
(21) Anmeldenummer: 09002308.6
(22) Anmeldetag: 24.02.2009
(51) Int. Cl.: F01K 23/06, F02C 3/28

(54) **Abfallverwertungsanlage zur Erzeugung von Energie**

(30) Priorität: 25.02.2008 DE 102008010919
(71) Anmelder: Franssen, Markus, 52070 Aachen (DE)
(72) Erfinder: Franssen, Markus, 52070 Aachen (DE)
(74) Vertreter: Plate, Jürgen

(57) **Zusammenfassung**

Die vorliegende Erfindung betrifft eine Abfallverwertungsanlage zur Erzeugung von elektrischer Energie aus Brenngasen, umfassend mindestens einen Vergaserofen mit einem oberen, mittleren und unteren Abschnitt, in Verbindung oder verbindbar mit diesem mindestens einen Gasverdichter, in Verbindung oder verbindbar mit diesem mindestens ein Turbinenmodul, umfassend mindestens eine Brennkammer und mindestens eine Turbine, und in Verbindung oder verbindbar mit dem Turbinenmodul mindestens einen Generator. Ferner betrifft die Erfindung eine Abfallverwertungsanlage zur Erzeugung von elektrischer Energie aus Brenngasen, umfassend mindestens einen Vergaserofen mit einem oberen, mittleren und unteren Abschnitt, in Verbindung oder verbindbar mit diesem mindestens eine Fallstromeinrichtung, in Verbindung oder verbindbar mit dieser mindestens eine Gasreinigungsanlage, in Verbindung oder verbindbar mit dieser mindestens eine Brennkraftmaschine und in Verbindung oder verbindbar mit dieser mindestens einen Generator. Schließlich betrifft die Erfindung ein Verfahren zur Erzeugung von elektrischer Energie aus vergasbaren Abfällen unter Verwendung der erfindungsgemäßen Abfallverwertungsanlagen.

## Beschreibung

Die vorliegende Erfindung betrifft eine Abfallverwertungsanlage sowie ein Abfallverwertungsanlagenmodul zur Erzeugung von Energie aus Brenngasen. Des weiteren betrifft die Erfindung ein Verfahren zur Erzeugung von elektrischer Energie unter Verwendung der erfindungsgemäßen Abfallverwertungsanlage sowie unter Verwendung des erfindungsgemäßen Abfallverwertungsanlagenmoduls.

Eine ressourcenschonende und ökologisch vertretbare Verwertung von Abfall wird angesichts der Gefahren, die mit dem unsachgemäßen Umgang mit Abfall einhergehen, auch im globalen Rahmen immer wichtiger. Sowohl bei der Deponierung von Abfall als auch bei der Abfallverbrennung sind regelmäßig aufwendige, kostenintensive Vorkehrungen zu treffen, um eine Gefährdung von Mensch und Umwelt dauerhaft verlässlich ausschließen zu können. Bekannt ist darüber hinaus die Vergasung von Abfallstoffen in Gaserzeugungsvorrichtungen im Wege einer Erhitzung unter Luftausschluss bzw. durch teilweise Verbrennung unter Luftmangel. Auf diese Weise können Abfallstoffe in ein weiterverwertbares Gas sowie in Reststoffe überführt werden.

Aus der DE 42 00 341 A1 ist ein Verfahren zur Abfallvergasung unter Ausbildung einer nicht auslaugbaren Schlacke und eines im wesentlichen Wasserstoff und Kohlenmonoxid als brennbare Bestandteile enthaltenden Gasgemisches beschrieben, bei dem die Vergasung mit Hilfe eines sauerstoffhaltigen Vergasermediums bei Temperaturen von mehr als 1200°C, vorzugsweise im Bereich von 1300 bis 1600°C, bei einer Luftzahl λ von 0,4 bis 0,8 in einer Zyklonkammer zu erfolgen hat. Eine für dieses Verfahren geeignete Vorrichtung ist neben einer Zyklonkammer mit mindestens einer Mehrstoffdüse, enthaltend ein Zentralrohr und ein Mantelrohr, auszustatten. Durch das Zentralrohr sind die zu vergasenden Abfallstoffe sowie ein Trägermedium einzuspeisen, während über das Mantelrohr das Vergasermedium eingebracht wird.

Aus der DE 196 06 575 C2 ist ein Verfahren zur gleichzeitigen stofflichen und energetischen Verwertung von Rest- und Abfallstoffen zu entnehmen, bei dem die Rest- und Abfallstoffe in einem Pyrolysereaktor durch Erhitzung auf Temperaturen zwischen 300 und 800°C thermisch vorbehandelt werden. Der hierbei entstehende Pyrolysekoks wird in eine feinkörnige Form gebracht, und das entstehende Pyrolysegas wird auskondensiert. Anschließend sind der feinkörnige Pyrolysekoks, das Pyrolysekondensat und das verbleibende Pyrolysegas einem Hoch- oder Kupol-Ofen zuzuführen. Das den Hoch- bzw. Kupol-Ofen verlassende Gichtgas kann sodann für die Verbrennung und Wärmebedarfsdeckung des Pyrolyseprozesses verwendet werden.

Die DE 198 53 717 C2 offenbart ein Verfahren zur Vergasung kompaktierter organischer Materialien zu einem kohlenmonoxid- und wasserstoffreichen Brenngas. Hierbei werden zu vergasende Brennstoffballen senkrecht einem Brennstoffeinlaufkanal zugeführt, der über einen Feststoffschieber eine Einschleusung der Brennstoffballen in einen Vergaserraum erlaubt. Der Hauptteil des für die Vergasung notwendigen Sauerstoffs wird über Sauerstofflanzen zugeführt, die konzentrisch um die in einer Schlackenwanne vorliegenden Brennstoffballen angeordnet sind. Ferner wird Sauerstoff über eine Sekundärzuführung zwecks Regelung der Temperatur zugeführt. Zünd- bzw. Pilotbrenner dienen zum Aufheizen und zur Inbetriebnahme der Vergaservorrichtung. Das bei der Vergasung entstehende Rohgas sowie die Schlacke werden durch die Einspritzung von Wasser gekühlt und anschließend abgeführt.

Aus der DE 31 21 206 C2 geht ein Verfahren zum Vergasen fester Abfälle unter Überdruck in einem Schachtgenerator hervor. Die gegebenenfalls vorgehaltenen zerkleinerten und/oder pelletierten Abfälle werden in dem Schachtgenerator im Gegenstrom getrocknet und vergast, indem dem Herd ein Vergasermittel mit mindestens 40 Vol. % Sauerstoff zugeführt wird. Das entstehende staubhaltige Rohgas wird gewaschen und gekühlt, wobei anfallende staub- und kondensatbeladene Reinigungsflüssigkeit in drei Flüssigkeitsströmungen unterteilt wird. Der zweite Flüssigkeitsstrom wird nach dem Abkühlen einer Wasch- und Trennzone zugeleitet. Der dritte Flüssigkeitsstrom wird in zwei weitere Teilströme unterteilt, von dem einer mit einem Teil des Rohgases zur Herstellung von in dem Verfahren einzusetzender Energie verbrannt wird und wobei der zweite Teilstrom nach Aufnehmen durch Rückspülung der ausgefilterten Feststoffe als Schlamm den festen Abfällen vor dem Vergasen zugemischt wird. Auf diese Weise sollen der Anfall eines in aufwendiger Weise zur reinigenden verschmutzten Abwasserstromes vermieden, der Gesamtenergieverbrauch gesenkt und die Ausbeute an nutzbarem Brenngas unter Minimierung der Rückführung von Flüssigkeit zu dem Schachtgenerator gesteigert werden.

Die US 3,729,298 betrifft ein Verfahren zur Umwandlung von Abfallstoffen in einerseits gasförmige Produkte und andererseits inerte Feststoffe. Bei diesem Verfahren kommt ein im wesentlichen vertikaler Verbrennungsschacht zum Einsatz, der im oberen Bereich über eine Trockenzone, in der Mitte über eine thermische Zersetzungszone sowie im unteren Bereich über eine Verbrennungs- und Schmelzzone verfügt. Ein zumindest 40 Gewichtsprozent Sauerstoff enthaltendes Gas wird in die Verbrennungs- und Schmelzzone in der Weise eingeführt, dass das Gewichtsverhältnis von Sauerstoff zu von in den Verbrennungsschacht eintretendem Abfall im Bereich von 0,15 bis 0,128 zu 1 liegt. Die Abfälle werden in der thermischen Zersetzungszone vergast. Der Hauptanteil der Feststoffe wird in der Verbrennungszone in Kohlenmonoxid und Wasserstoff überführt, welche bei der Verbrennung genügend Hitze erzeugen, um die verbleibenden anorganischen Feststoffe in einem schmelzflüssigen Zustand zu halten bzw. zu überführen. Die bei dem Vergaserprozess anfallenden Gase, insbesondere Wasserstoff und Kohlenmonoxid, werden über die Trockenzone abgeführt. Ein ähnliches Verfahren wird ebenfalls in der US 3,817,724 offenbart.

Die aus dem Stand der Technik bekannten Verfahren und Anlagen zur Verwertung von Abfallprodukten lassen noch stets Wünsche offen. Häufig werden nur Teilaspekte der Abfallverwertung beleuchtet. Hierdurch wird jedoch noch nicht eine Verwertungsanlage verfügbar gemacht, die unter herkömmlichen Betriebsbedingungen praxistauglich ist und die insbesondere auch sämtlichen zulassungs- und umwelttechnischen Vorgaben genügt.

Daher lag der vorliegenden Erfindung die Aufgabe zugrunde, eine Anlage sowie ein Verfahren zur Verwertung von Abfall verfügbar zu machen, die nicht mit den Nachteilen des Stands der Technik behaftet sind und die insbesondere ein Gesamtanlagenkonzept zur Verfügung stellen, das auf sämtliche Anforderungen während der gesamten Verwertungskette eingeht, ökologisch unbedenklich ist und eine zufriedenstellende Energiebilanz aufweist.

Demgemäß wurde eine Abfallverwertungsanlage zur Erzeugung von elektrischer Energie aus Brenngasen gefunden, umfassend mindestens einen Vergaserofen mit einem oberen, mittleren und unteren Abschnitt, in Verbindung oder verbindbar mit diesem mindestens einen Gasverdichter, in Verbindung oder verbindbar mit diesem mindestens ein Turbinenmodul, umfassend mindestens eine Brennkammer und mindestens eine Turbine, und in Verbindung oder verbindbar mit dem Turbinenmodul mindestens einen Generator.

In einer besonders zweckmäßigen Ausführungsform verfügt die erfindungsgemäße Abfallverwertungsanlage gemäß der ersten Ausgestaltung ferner über mindestens eine Fallstromeinrichtung, die einlassseitig mit dem Vergaserofen und auslassseitig direkt oder indirekt, mit dem Gasverdichter oder mit einer Lüftereinheit oder mit einer Gasreinigungsanlage verbunden oder verbindbar ist.

Darüber hinaus ist die erfindungsgemäße Abfallverwertungsanlage gemäß erster Ausgestaltung vorzugsweise auch ausgestattet mit mindestens einer Gasreinigungsanlage, die einlassseitig mit der Fallstromeinrichtung oder einer Lüftereinheit und die auslassseitig mit dem Gasverdichter oder einer Lüftereinheit verbunden oder verbindbar ist.

Die der Erfindung zugrunde liegende Aufgabe wird ferner gelöst durch eine Abfallverwertungsanlage zur Erzeugung von elektrischer Energie aus Brenngasen, umfassend mindestens einen Vergaserofen mit einem oberen, mittleren und unteren Abschnitt, in Verbindung oder verbindbar mit diesem mindestens eine Fallstromeinrichtung, in Verbindung oder verbindbar mit dieser mindestens eine Gasreinigungsanlage, in Verbindung oder verbindbar mit dieser mindestens eine Brennkraftmaschine und in Verbindung oder verbindbar mit dieser mindestens einen Generator, auch zweite Ausgestaltung genannt.

Die erfindungsgemäßen Abfallverwertungsanlagen sind vorteilhafterweise auch mit mindestens einer Lüftereinheit ausgestattet. Diese Lüftereinheit liegt in einer besonders zweckmäßigen Ausgestattung einlassseitig mit dem Vergaserofen und auslassseitig mit der Fallstromeinrichtung verbunden oder verbindbar vor. Alternativ oder zusätzlich kann die Lüftereinheit auch einlassseitig mit der Fallstromeinrichtung und auslassseitig mit der Gasreinigungsanlage verbunden oder verbindbar sein. Über die Lüftereinheit kann die Entnahme von Gas aus dem Vergaserofen bewerkstelligt sowie kontrolliert und geregelt werden.

Grundsätzlich kann jeglicher vergasbare Abfall, sei es Hausmüll oder Industrieabfall, dem Vergaserofen, insbesondere einem Kupol-Ofen, den erfindungsgemäßen Verwertungsanlagen, auch unsortiert, zugeführt werden. Unter dem Begriff Abfall soll vorliegend nicht nur herkömmlicher Haus- oder Industriemüll verstanden werden, der in der Regel brennbare Stoffe wie Holz, Nahrungsmittel, Abfallpapier und nicht brennbare Stoffe wie Metall und Glas enthält, sondern auch andere Abfallstoffe oder feste Brennstoffe wie Sägemehl, Holzspäne, Kohle, Kompost, Mulch, entsorgte Teppich- oder Teppichbodenreste, Sondermüll unterschiedlichster Herkunft sowie allgemein Stoffe, die einen brennbaren bzw. vergasbaren organischen Anteil enthalten.

Vergaser- oder Kupol-Öfen sind dem Fachmann bekannt, beispielsweise aus der Herstellung von Gusseisen. Hierbei handelt es sich im allgemeinen um Schachtöfen. Geeignete Kupol-Öfen gehen z.B. aus der DE 31 24 865 A1, WO 1999/06 03 20 A2 und der DE 690 02 082 T2 hervor. In einer Ausführungsform kann ein geeigneter Vergaser- bzw. Kupol-Ofen eine Höhe im Bereich von 5 bis 8 m aufweisen und/oder mit einem mittleren Innendurchmesser im Bereich von 1 bis 5 m, vorzugsweise 1,5 bis 4,5 m ausgestattet sein. Kupol-Öfen können als Mitstrom- und als Gegenstromöfen ausgeführt sein. Letztere Variante ist vorliegend bevorzugt.

Dem Vergaser- bzw. Kupl-Ofen können, insbesondere unter Sauerstoff- bzw. Luftausschluss bzw. unter weitgehendem Sauerstoff- bzw. Luftausschluss, Abfallstoffe über eine im oberen Bereich befindliche Öffnung, beispielsweise in brikettierter Form, zugeführt werden. Bei einer derartigen Ausgestaltung ist den erfindungsgemäßen Abfallverwertungsanlagen vorzugsweise mindestens eine Brikettiertereinheit vorgeschaltet. Brikettierte Abfallmateralien können z.B. in einem geeigneten Vorratsbunker vorgehalten werden, um so einen fortwährenden Vergaserprozess sicherzustellen.

Optional kann der Vergaser- bzw. Kupol-Ofen ebenfalls mit einer Sauerstoffanlage, enthaltend z. B. Sauerstofflanzen, ausgestattet sein, um z.B. Verstopfungen im Inneren des Vergasers zu lösen.

Für die im wesentlichen sauerstoff- bzw. luftfreie Zuführung von Abfallstoffen, beispielsweise in brikettierter Form, zu dem Vergaser- bzw. Kupol-Ofen hat es sich als vorteilhaft erwiesen, dessen oberen Abschnitt oder eine im oberen Abschnitt vorliegende Befülleinheit mit einer Schleuseneinheit, insbesondere enthaltend mindestens zwei Verschlussschieber, auszustatten. Diese Schieber sind vorzugsweise in vertikaler Ausrichtung übereinander angeordnet, beispielsweise in dem oberen Abschnitt des Vergaser- bzw. Kupol-Ofens selber oder in einem vorzugsweise vertikal ausgerichteten Zuführrohr zu dem oberen Abschnitt des Vergaser- bzw. Kupol-Ofens als Befülleinheit, und bilden mit dem oberen Abschnitt des Vergaser- bzw. Kupol-Ofens, insbesondere mit der Befülleinheit, eine Schleuseneinheit. Diese Verschlussschieber sind ausgelegt und geeignet, den Austritt von Gasen aus dem Vergaser- bzw. Kupol-Ofen sowie den Eintritt von Luft bzw. Sauerstoff in den Vergaser- bzw. Kupol-Ofen zu unterbinden. Indem man erfindungsgemäße Abfallverwertungsanlagen verwendet, die zusätzlich mit mindestens zwei Schiebern ausgestattet sind, welche in der Lage sind, insbesondere im Befüllbereich des Vergaser- bzw. Kupol-Ofens, eine Schleuse zu bilden, kann das erfindungsgemäße Verfahren besonders effizient geführt werden. Bei geschlossenem unterem Schieber öffnet man z.B. den oberen Schieber. Nachdem man Abfallmaterial auf den unteren Schieber aufgebracht hat, kann der obere Schieber geschlossen werden, woraufhin der untere Schieber unter Freigabe der Abfallmaterialien in den Vergaser- bzw. Kupol-Ofen geöffnet werden kann. Durch diese Schleuse ist gewährleistet, dass keine substantiellen Mengen an Gas aus dem Vergaser- bzw. Kupol-Ofen entweichen können. Des weiteren kann sichergestellt werden, dass durch das Eintragen von Abfall in den Vergaserofen die sauerstoffarme Atmosphäre im Ofeninneren der Eintritt von Luft nicht nachhaltig zugelassen wird. Hierdurch kann ein kontinuierlicher Vergasungsprozess aufrechterhalten werden. Selbstverständlich können anstelle von Schiebern auch Verschlussklappen oder dergleichen eingesetzt werden. Es hat für die für die erfindungsgemäßen Anlagen in Betracht kommenden Verschlusseinheiten vorteilhafterweise sichergestellt zu sein, dass die untere Verschlusseinheit eingerichtet und geeignet ist, im geschlossenen Zustand Abfallmengen zu tragen sowie diese bei geschlossener oberer zweiter Verschlusseinheit in das Ofeninnere freigeben zu können.

In einer Ausführungsform des erfindungsgemäßen Verfahrens hat es sich als vorteilhaft erwiesen, zumindest während der Aufheizphase des Vergaser- bzw. Kupol-Ofens die Verschlusseinheiten mindestens teilweise geöffnet zu halten.

Der obere Abschnitt des Vergaserofens kennzeichnet im allgemeinen denjenigen Teil, in dem das Abfallmaterial in das Ofeninnere eingeführt wird. Der untere Abschnitt des Vergaserofens umfasst im allgemeinen den Bereich, in dem die Brennereinheiten vorliegen bzw. anbringbar sind und erstreckt sich regelmäßig bis zur Auflageeinheit für die Auflage der zu vergasenden Abfälle, welche vorzugsweise in Form eines Gitterrostes vorliegt. Der mittlere Abschnitt des Vergaserofens erstreckt sich im allgemeinen sodann zwischen der Auflageeinheit bzw. dem Gitterrost und dem oberen Abschnitt und ist regelmäßig derjenige Bereich, in dem jedenfalls der Hauptanteil des zu vergasenden Abfallmaterials vorliegt. Der obere Abschnitt des Vergaserofens weist vorteilhafterweise einen größeren Durchmesser auf als der sich anschließende Abschnitt des Vergaserofens. Dieser obere Abschnitt des Vergaserofens mit größerem Durchmesser wird beim Fahren des Vergaserofens vorzugsweise zumindest in seinem unteren Bereich mit zu vergasendem Abfall befüllt, damit eine größere Oberfläche erhalten wird, über die die erzeugten Brenngase entweichen können.

Der Vergaser- bzw. Kupol-Ofen verfügt in einer bevorzugten Ausgestaltung über eine flüssigkeitsgekühlte Abfallauflagevorrichtung, insbesondere in Form eines flüssigkeitsgekühlten Gitterrostes. Auf diese Auflagevorrichtung bzw. auf diesem Gitterrost bzw. auf auf diesen Gitterstäben aufliegenden Schamottsteinen, beispielsweise in Kugelform, gelangen die zu vergasenden Abfallstoffe zur Auflage. Für die Kühlung, z.B. mit Wasser oder Öl als Kühlflüssigkeit, der Auflagevorrichtung bzw. des Gitterrostes kann die Auflagevorrichtung bzw. der Gitterrost teilweise oder vollständig aus Rohren gebildet sein, durch die bei Bedarf Kühlflüssigkeit geleitet werden kann. Die Auflagevorrichtung bzw. der Gitterrost ist vorzugsweise in der Weise ausgestaltet, dass anorganische Reststoffe wie Schlacken, Metalle oder Metalloxide in z. B. flüssige, zähflüssiger oder fester Form durch z.B. den Gitterrost hindurch in den unteren Abschnitt des Vergaser- bzw. Kupol-Ofens gelangen und sich sodann ohne weiteres dem unterem Abschnitt des Ofens entnehmen lassen. Vorzugsweise sind die Gitterroststäbe derart gearbeitet, dass die Reststoffe ohne weiteres zwischen diesen hindurchfallen können. In einer Ausführungsform liegen die Stäbe, insbesondere die für die Durchleitung von Kühlflüssigkeit ausgelegten Stäbe, parallel und/oder können, insbesondere einzeln, ausgetauscht werden.

In einer möglichen Ausführungsform besitzt der Vergaser- bzw. Kupol-Ofen im unteren Abschnitt, vorzugsweise unterhalb der Abfallauflagevorrichtung bzw. des Gitterrostes, mindestens eine Brennereinheit. In einer besonderen zweckmäßigen Ausgestaltung verfügen die erfindungsgemäßen Verwertungsanlagen über mindestens zwei, insbesondere mindestens drei Brennereinheiten. Selbstverständlich können auch fünf, sieben oder mehr Brennereinheiten eingesetzt werden.

Damit die Vergasertemperatur im Vergaser- bzw. Kupol-Ofen keine zu hohen Werte annimmt, welche einer optimalen Vergasung zuwiderlaufen würden, kann der Vergaser- bzw. Kupol-Ofen zumindest abschnittsweise mit einer Kühlung ausgestattet sein, beispielsweise im Wege einer Ummantelung mit Kühlschlangen. Vorzugsweise wird der mittlere Abschnitt, beispielsweise der zwischen dem Gitterrost und dem Einfüllende des Vergaser- bzw. Kupol-Ofens liegende Abschnitt, gekühlt. Selbstverständlich ist es auch möglich, den Vergaser- bzw. Kupol-Ofen derart auszuführen, dass dieser vollständig kühlbar ist. Zwecks Isolierung können beispielsweise der mittlere sowie insbesondere der untere Abschnitt des Vergaser- bzw. Kupolofens zumindest partiell mit Schamottsteinen ausgekleidet sein.

Mit den Fallstromeinrichtungen soll über eine Expansion und/oder Flüssigkeitssprühnebelkühlung die Temperatur des im Vergaserofens entnommen Verbrennungsgases reduziert werden. Geeignete Fallstromeinrichtungen verfügen demgemäß über mindestens einen Expansionsbereich. In diesem Bereich erweitert sich das dem Verbrennungsgas zur Verfügung stehende Volumen. Alternativ kann zum Abkühlen und Vorreinigen des Verbrennungsgases auch eine Quentsch eingesetzt werden.

Die Fallstromeinrichtung ist vorzugsweise über eine Rohrleitung im oberen Abschnitt, insbesondere im Bereich des Einfüllendes, des Vergaser- bzw. Kupol-Ofens mit diesem verbunden. Diese Verbindungsleitung setzt vorzugsweise in dem Bereich des oberen Abschnitt an, der regelmäßig beim Fahren des Vergaserofens nicht mit Abfallmaterialien befüllt wird. Dieser Abschnitt ist vorzugsweise gegenüber dem mittleren Abschnitt des Vergaser- bzw. Kupol-Ofens mit einem größeren Durchmesser ausgestattet, so dass die in dem Ofen entstehenden Verbrennungsgase über eine größere Oberfläche entweichen bzw. abgeführt werden können. Über die Rohrleitung wird der Fallstromeinrichtung das beim Vergaservorgang im Vergaser bzw. Kupol-Ofen entstehende Gas zugeführt. Die Fallstromeinrichtung ist demgemäß einlassseitig mit dem Vergaserofen und auslassseitig zumeist, direkt oder indirekt, mit einem Gasverdichter oder mit einer Lüftereinheit oder mit einer Gasreinigungsanlage verbunden oder verbindbar.

In einer bevorzugten Ausgestaltung ist zwischen dem Vergaser- bzw. Kupol-Ofen und der Fallstromeinrichtung eine Wärmeauskopplungseinheit vorgesehen. Mit dieser Wärmeauskoppelungseinheit kann die Temperatur des dem Vergaser- bzw. Kupol-Ofen entnommenen Gasgemisches auf beispielsweise Temperaturen im Bereich von 350 bis 400°C reduziert werden. In der Regel werden dem Vergaser- bzw. Kupol-Ofen Gase mit einer Temperatur im Bereich von 400 bis 500°C, beispielsweise 420°C, entnommen. Alternativ oder zusätzlich kann mindestens eine weitere Wärmeauskopplungseinheit zwischen dem Vergaserofen und einem Gasverdichter vorgesehen sein.

Die Verbindung zwischen den einzelnen Komponenten der erfindungsgemäßen Abfallverwertungsanlage kann jeweils über geeignete, dem Fachmann geläufige Rohrleitungen hergestellt werden.

Der Vergaserofen selber oder die den Ofen und die Fallstromeinrichtung verbindende Leitung kann darüber hinaus mit einer Ableitung verbunden oder verbindbar sein. Für den Fall, dass zwar Verbrennungsgas produziert wird in dem Ofen, die dem Ofen nachgeschalteten Komponenten jedoch nicht ordnungsgemäß betrieben werden können, beispielsweise defekt sind, hat es sich als vorteilhaft erwiesen, das Verbrennungsgas abzuführen und gegebenenfalls zwecks Unschädlichmachung einer Reinigungseinheit und/oder einer Verbrennungseinheit zuzuführen.

Bei einer geeigneten Fallstromeinrichtung tritt das dem Vergaser- bzw. Kupol-Ofen entnommene Gas in diese durch eine obere Öffnung ein. Im oberen Bereich der Fallstromeinrichtung wird in einer Ausgestaltung über mindestens eine Düse, vorteilhafterweise oberhalb des Expansionsbereiches der Fallstromeinrichtung, Flüssigkeit, vorzugsweise entgegen der Eintrittsrichtung des Gases, eingesprüht. Selbstverständlich kann eine geeignete Fallstromeinrichtung auch über mehrere hintereinandergeschaltete Expansionsbereiche verfügen. Hierbei kann jeder Expansionsbereich mit einer oder mehreren Düsen zum Einsprühen von Flüssigkeit ausgestattet sein. Selbstverständlich ist es in einer vorteilhaften Ausgestaltung möglich, das über Düsen in die Fallstromeinrichtung eingespeiste Wasser nach der Abtrennung von Feststoffanteilen wiederzuverwenden. In einer besonders bevorzugten Ausführungsform einer geeigneten Fallstromeinrichtung sind ferner geeignete Mischer vorgesehen, mit denen Tenside in die in die Fallstromeinrichtung einzuspeisenden wässrigen Flüssigkeiten eingemischt werden. Die Temperatur der in die Fallstromeinrichtung einzuspeisenden Flüssigkeiten kann z.B. bei Raumtemperatur oder darunter liegen.

Zweckmäßige Ausgestaltungen solcher Fallstromeinrichtungen weisen demgemäß im Anschluss an den Einlassbereich eine Querschnittsvergrößerung auf. Durch die Expansion des Gases wird auf sehr kurzer Strecke eine erhebliche Temperaturreduzierung bewirkt. In der Fallstromeinrichtung kann die Temperatur des Gases auf Werte im Bereich von 50 bis 100°C, zum Beispiel auf etwa 60°C reduziert werden. Die Temperaturminderung in der Fallstromeinrichtung ist in einer bevorzugten Ausführungsform sowohl auf aerodynamische Effekte als auch auf die eingedüste wässrige Flüssigkeit zurückzuführen. Geeignete Fallstromeinrichtungen finden sich zum Beispiel in der EP 0 972 556 A1 beschrieben.

Der in der Fallstromeinrichtung anfallende Schlammanteil kann dem Gerät entnommen und gemäß einer Ausführungsvariante dem Vergaser- bzw. Kupol-Ofen wieder zugeführt werden. Dieses geschieht beispielsweise in der Art, dass man zunächst den sich im unteren Bereich der Fallstromeinrichtung absetzenden, Feststoffe enthaltenden Flüssigkeitsanteil in einen Absetzbehälter überführt und die abgetrennten Feststoffpartikel darin sedimentieren lässt. In der Fallstromeinrichtung tritt regelmäßig eine Vorreinigung des Verbrennungsgasgemisches dahingehend ein, dass Rußpartikel und Harzkomponenten, beispielsweise hochmolekulare Kohlenwasserstoffe, abgetrennt werden.

Geeignete Gasreinigungsanlagen umfassen in einer Ausführungsform mindestens einen Walzenwäscher (Variante II). Solche rotierenden Walzenwäscher sind dem Fachmann bekannt. Geeignete Walzenwäscher stellen beispielsweise Trommeln dar, welche mit einer Vielzahl an Öffnungen ausgestattet sind. Mit Hilfe von Walzenwäschern wird ein sehr dünner wässriger Flüssigkeitsfilm erzeugt, der aufgrund seiner großen Oberfläche in Wechselwirkung mit den Schmutzpartikeln des zu reinigenden Gases austritt. Die Reinigungswirkung kann durch den Zusatz von Tensiden zu der Waschflüssigkeit nochmals gesteigert werden.

In einer alternativen, bevorzugten Ausgestaltung verfügt die Gasreinigungsanlage über mindestens eine Sprühdüse zur Erzeugung eines Flüssigkeitsnebels bzw. Aerosols (Variante III). Geeignete Gasreinigungsanlagen arbeiten demgemäß nach dem so genannten Nebelverfahren, bei dem in den Gasstrom mittels mindestens einer Düse ein wässriges System fein zerstäubt eingetragen wird. Etwaige partikuläre Staubteilchen und sonstige feinteilige Feststoffe werden an den einzelnen Wassertröpfchen des gebildeten Aerosols ad- bzw. absorbiert. Die mit diesen Feststoffen beladenen Wassertröpfchen können in geeigneter Weise in einem so genannten Demistor abgefangen werden. Der Demistor stellt geeigneter Weise ein Gewebe, insbesondere Kunststoffgewebe, dar, vorzugsweise mit sich kreuzenden Fäden. Die in der Gasreinigungsanlage zum Einsatz kommenden Sprühdüsen sind im allgemeinen darauf ausgelegt, durchschnittliche Tröpfchengrößen im Bereich von 3 bis 100 µm, insbesondere von 5 bis 70 µm, zu erzeugen.

Die Tröpfchengröße des in der Gasreinigungsanlage erzeugten Aerosols liegt besonders bevorzugt in einem Bereich von 5 bis 40 µm, beispielsweise in einem Bereich von 5 bis 30 µm. Das wässrige System kann über geeignete Einspritzdüsen, beispielsweise bei einem Druck von 60 bar, in die Gasreinigungsanlage eingespeist werden, vorzugsweise versetzt mit oberflächenaktiven Stoffen wie Tensiden. Geeignete Aerosole können z.B. auch sogenannte Mischnebel umfassen, in denen Tröpfchen aus wässrigen Systemen, die mit unterschiedlichen, beispielsweise gegensätzlichen, chemischen Eigenschaften ausgestattet sind, vorliegen. So kann z.B. ein erstes wässriges System einen sauren pH-Wert und ein zweites wässriges System einen basischen pH-Wert aufweisen, mit der Folge, dass in dem Aerosol Tröpfchen mit sauren und basischen Eigenschaften nebeneinander vorliegen. Derartige Aerosole bzw. Mischnebel sowie Verfahren zu deren Herstellung können der DE 195 45 679 A1 entnommen werden.

Das die Gasreinigungsanlage verlassende Gas hat regelmäßig noch eine Temperatur im Bereich von 30 bis 70°C, beispielsweise im Bereich von 35 bis 55°C. Auch der in der Gasreinigungsanlage anfallende Schlamm kann wiederum dem Vergaser- bzw. Kupol-Ofen zugeführt werden.

Darüber hinaus kann als Gasreinigungsanlage ein Zyklon zur trockenen Abtrennung fester Bestandteile aus dem dem Vergaserofen entweichenden Brenngasgemisch vorgesehen sein, der einlassseitig mit dem Vergaserofen und der auslassseitig direkt oder indirekt mit dem Gasverdichter verbunden oder verbindbar ist (Variante I).

Das gereinigte Gasgemisch kann in einer weiteren Ausführungsform einem Luftmischer zugeführt werden, um ein optimiertes Verbrennungsgasgemisch zu erzeugen. In einer Ausführungsform werden in dem Luftmischer gereinigtes Gas und Luft zu gleichen Teilen eingemischt. Anschließend gelangt das Gasgemisch, vorzugsweise das über den Luftmischer erhaltene Gas/Luftgemisch, in den Gasverdichter, in dem das Gas komprimiert wird.

Das verdichtete Gas bzw. das verdichtete Gas/Luftgemisch kann sodann einer Brennkammer bzw. einem diese Brennkammer umfassenden Turbinenmodul zwecks Erzeugung elektrischer Energie zugeführt werden. Gemäß einer weiteren Ausführungsform ist es ebenfalls möglich, das gereinigte Gas sowie Luft oder Sauerstoff in separaten Gas bzw. Luftverdichtern zu verdichten und die verdichteten Volumenströme erst kurz vor oder in der Brennkammer zusammenzuführen. Der Luftverdichter ist demgemäß eingerichtet und geeignet zur Einspeisung von komprimierter Luft in die Brennkammer und/oder eine Leitung von dem Gasverdichter zu dem Turbinenmodul, insbesondere der Brennkammer.

Das Turbinenmodul umfasst in einer zweckmäßigen Ausgestaltung mindestens eine Brennkammer und mindestens eine Turbine bzw. ein Turbinenlaufrad.

In der Brennkammer wird das verdichtete Gas bzw. Gasgemisch vorzugsweise bei Temperaturen im Bereich von 2000 bis 3000°C verbrannt.

In einer bevorzugten Ausgestaltung umfasst das Turbinenmodul eine Verdränger-Rotationsturbine, wie z.B. in der DE 31 49 040 beschrieben. Derartige üblicherweise mit einem Gehäuse und einer Abtriebswelle ausgestattete Turbinenmodule verfügen in einer besonders zweckmäßigen Ausgestaltung über einen elliptischen, durch einen konzentrisch gelagerten Rotor in zwei einander gegenüberliegende Radialkammern unterteilten Innenraum sowie über mindestens zwei Gruppen jeweils exzentrisch und radial verschiebbar im Rotor gelagerter und mit dem Rotor rotierender, eine reibungsfreie Dichtung über der die beide radialen Kammern begrenzenden Innenraumwandung bewirkenden Rotorschaufeln, sowie ferner Ein- und Auslässe.

Ferner wird bevorzugt auf solche Turbinen zurückgegriffen, die in der EP 432 287 A1 beschrieben sind. Hierbei handelt es sich um Verdränger-Zahnradpumpen- oder - Zahnradmotor- Rotationskolbmaschinen bzw. um Verdränger-Zahnradpumpen- oder - Zahnradmotorähnliche Rotationskolbenmaschinen mit einem Gehäuse, das Einrichtungen aufweist, die mindestens einen Innenhohlraum begrenzen. Dieser Innenhohlraum ist vorzugsweise in eine Vielzahl von miteinander fluchtenden und sich teilweise überschneidenden Zylinderkammern unterteilt, die zusammen eine Kammergruppe bilden. Ferner können in dem Gehäuse eine entsprechende Vielzahl benachbarter Wellen vorliegen, die drehbar in dem Gehäuse gelagert sind, wobei jede dieser Wellen parallel zu den anderen Wellen liegt und im wesentlichen zentrisch in jeweils einer dieser Kammern angeordnet ist. Des weiteren enthält das Gehäuse vorzugsweise Einrichtungen, die mindestens zwei Einlasskanäle und mindestens zwei Auslasskanäle zum Einlassen bzw. Auslassen eines Arbeitsmediums in die oder bzw. aus der Kammergruppe bilden. Diese Kammergruppe weist einen ersten Rotor auf, der an einer mittleren Welle dieser Vielzahl von Wellen befestigt ist. Der erste Rotor hat eine Außenfläche, an der mehrere Druckschaufeln befestigt sind, die sich in Längsrichtung desselben erstrecken und radial im Abstand voneinander angeordnet sind. Diese Kammergruppe nimmt weiterhin mehrere Nutenrotoren auf, die an den der mittleren Welle benachbarten Wellen befestigt sind, wobei jeder Nutenrotor in engster Nähe zu dem ersten Rotor angeordnet ist und an seiner Außenfläche mehrere Nuten hat, die damit radial in einem Abstand entsprechend dem Abstand dieser Druckschaufeln voneinander angebracht sind. Jede dieser Nuten hat eine Form zur Aufnahme einer dieser Druckschaufeln, um bei der Rotation des ersten Rotors und des Nutenrotors das Eingreifen der Druckschaufeln in diese Nuten zu ermöglichen.

Generatoren zur Stromerzeugung, die mit einer Abtriebswelle einer Turbine verbunden oder verbindbar sind, sind dem Fachmann bekannt.

Eine geeignete Ausführungsform einer erfindungsgemäßen Abfallverwertungsanlage gemäß der ersten Ausgestaltung umfasst einen Vergaserofen, in Verbindung oder verbindbar mit mindestens einem Gasverdichter, sowie diesen Gasverdichter, in Verbindung oder verbindbar mit mindestens einem Turbinenmodul, sowie dieses Turbinenmodul, umfassend mindestens eine Brennkammer und mindestens eine Verdänger-Rotationsturbine, insbesondere umfassend einen elliptischen, durch einen konzentrisch gelagerten Rotor in zwei einander gegenüberliegende Radialkammern unterteilten Innenraum sowie über mindestens zwei Gruppen jeweils exzentrisch und radial verschiebbar im Rotor gelagerter und mit dem Rotor rotierender, eine reibungsfreie Dichtung über der die beide Radialkammern begrenzenden Innenraumwandung bewirkenden Rotorschaufeln, sowie ferner Ein- und Auslässe. Alternativ können hier als Turbinen auch die vorangehend im Detail beschriebenen Verdränger-Zahnradpumpen- oder- Zahnradmotor-Rotationskolbenmaschinen bzw. Verdränger-Zahnradpumpen- oder -Zahnradmotor ähnlichen Rotationskolbenmaschinen eingesetzt werden. Optional kann über einen Luftverdichter komprimierte Luft in die Zuleitung und/oder direkt in die Brennkammer eingespeist werden.

Gemäß einer weiteren zweckmäßigen Ausführungsform können Abfallverwertungsanlagen gemäß der ersten Ausgestaltung vorgesehen sein, umfassend mindestens einen Vergaserofen, mindestens eine Fallstromeinrichtung, mindestens einen Gasverdichter, optional mindestens einen Luftverdichter, und ein Turbinenmodul, umfassend mindestens eine Brennkammer und mindestens eine Turbine, sowie einen Generator.

In einer besonders bevorzugten Ausführungsform können die beiden vorangehend beschriebenen Varianten zweckmäßiger Abfallverwertungsanlagen zusätzlich mit einer Gasreinigungsanlage ausgestattet, die zwischen der Fallstromeinrichtung und dem Gasverdichter vorliegt.

Erfindungsgemäße Abfallverwertungsanlagen, insbesondere solche gemäß der ersten Ausgestaltung, verfügen ferner in einer weiteren zweckmäßigen Ausführungsform über mindestens eine mit der Brennkammer verbundene oder verbindbare Einheit zur Einspeisung von Wasserdampf. Auf dieser Weise wird bei den hohen Temperaturen in der Brennkammer zusätzliche Leistung freigesetzt.

Über die Turbine bzw. die Turbinenlaufräder wird der in der Brennkammer erzeugte Druck in Drehbewegung umgesetzt. Das erzeugte Drehmoment kann sodann an einen Generator übertragen werden.

Zweckmäßigerweise wird bei der vorangehend genannten Ausführungsform ferner ein Kondensator, der der Turbine nachgeschaltet ist und mit dieser in Verbindung steht, vorgesehen, der eingerichtet und geeignet ist zur Abscheidung von Wasser aus dem Turbinenmodul entweichenden Gas.

Eine besonders zweckmäßige Ausgestaltung der vorangehend genannten Ausführungsform, umfassend die Einspeisung von Wasserdampf in die Brennkammer, sieht ferner mindestens einen in Wirkverbindung mit der Brennkammer des Turbinenmoduls stehenden Wärmetauscher vor. Dieser Wärmetauscher entzieht dem bei der Verbrennung entstehenden Abgas Wärmeenergie, mit deren Hilfe dann der Wasserdampf erzeugt werden kann, welcher in die Brennkammer eingeleitet wird. In dem Wärmetauscher kann z.B. das in dem Kondensator abgefangene Wasser, das gegebenenfalls zuvor eine Wasseraufbereitungseinheit durchlaufen hatte, in Wasserdampf überführt werden.

Schließlich kann auch noch die Restwärme des das Turbinenmodul oder die Brennkraftmaschine verlassenden Gases über einen nachgeschalteten Wärmeaustauscher genutzt werden.

Eine Weiterentwicklung der erfindungsgemäßen Abfallverwertungsanlagen sieht ferner eine sich an das Turbinenmodul oder die Brennkraftmaschine anschließende und mit mindestens einer Brennereinheit des Vergaserofens verbundene oder verbindbare Leitungen vor, die eingerichtet und geeignet ist zur Zuführung zumindest eines Teils der Verbrennungsabgase von dem Turbinenmodul oder der Brennkraftmaschine zu mindestens einer Brennereinheit. Auf dieser Weise kann der in dem Verbrennungsgas enthaltene Restsauerstoffgehalt einer weiteren Nutzung zugeführt werden.

Die der Erfindung zugrunde liegende Aufgabe wird des weiteren gelöst durch ein Abfallverwertungsanlagenmodul, umfassend mindestens zwei erfindungsgemäße Abfallverwertungsanlagen, sowie durch ein Abfallverwertungsanlagenmodul, umfassend mindestens zwei Anlagenlinien, jeweils umfassend mindestens einen Vergaserofen, in Verbindung oder verbindbar mit diesem mindestens eine Fallstromeinrichtung, in Verbindung oder verbindbar mit dieser gegebenenfalls mindestens eine Gasreinigungsanlage, in Verbindung oder verbindbar mit der Fallstromeinrichtung bzw. der Gasreinigungsanlage mindestens einen Gasverdichter und in Verbindung oder verbindbar mit diesem mindestens ein Turbinenmodul, umfassend mindestens eine Brennkammer und mindestens eine Turbine, wobei mindestens zwei, insbesondere sämtliche, Anlagenlinien jeweils einen separaten Generator in Verbindung oder verbindbar mit dem Turbinenmodul aufweisen oder wobei die Turbinenmodule mindestens einer oder mehrerer Anlagenlinien auch durch einen oder mehrere Motoren ersetzt werden können. Einzelne Komponenten dieser Linien stehen vorzugsweise miteinander in Wirkverbindung. Beispielsweise können mindestens zwei Anlagen bzw. Anlagenlinien über mindestens eine Bypass-Leitung verbunden oder verbindbar sein. Auf diese Weise wird ein redundant arbeitendes Verwertungsanlagenmodul geschaffen, mit der das Problem möglicher Ausfallzeiten nochmals reduziert werden kann. Die genannten Komponenten der Anlagenlinien entsprechen in ihren speziellen und allgemeinen Ausführungsformen den vorangehend beschriebenen Bauteilen der erfindungsgemäßen Verwertungsanlagen.

Gemäß einer besonders zweckmäßigen Ausgestaltung verfügt das erfindungsgemäß Abfallverwertungsanlagenmodul über mindestens eine erste Bypass-Leitung von dem Vergaserofen einer ersten Anlagenlinie bzw. Anlage zu der Fallstromeinrichtung einer zweiten Anlagenlinie bzw. Anlage, mindestens eine zweite Bypass-Leitung von der Fallstromeinrichtung einer ersten Anlagenlinie bzw. Anlage zu der Gasreinigungsanlage und/oder dem Gasverdichter einer zweiten Anlagenlinie bzw. Anlage, mindestens eine dritte Bypass-Leitung von der Gasreinigungsanlage einer ersten Anlagenlinie bzw. Anlage zu dem Gasverdichter einer zweiten Anlagenlinie bzw. Anlage und/oder mindestens eine vierte Bypass-Leitung von dem Gasverdichter einer ersten Anlagenlinie bzw. Anlage zu dem Turbinenmodul einer zweiten Anlagenlinie bzw. Anlage.

Besonders hohen Umweltstandards wird eine solche erfindungsgemäße Abfallverwertungsanlage gerecht, bei der dass die Brikettiereinheit, der Abfallvorratsspeicher, der Vergaserofen, insbesondere die Befülleinheit des Vergaserofens, die Fallstromeinrichtung, die Lüftereinheit und/oder die Gasreinigungsanlage an mindestens einer Luftreinigungsanlage angeschlossen oder einschließbar sind. Die genannten Komponenten können hierbei unter geringem Unterdruck gehalten werden, sodass sichergestellt ist, dass keinerlei Geruchsbelästigung oder sonstige Gefährdung für die Umwelt resultiert.

Gemäß einem weiteren Aspekt wird die der Erfindung zugrunde liegende Aufgabe gelöst, durch ein Verfahren zur Erzeugung von elektrischer Energie aus Abfall unter Verwendung von erfindungsgemäßen Abfallverwertungsanlagen, wobei der Abfall, insbesondere in brikettierter Form, in dem Vergaserofen unter sauerstoffarmen Bedingungen, insbesondere bei Temperaturen im Bereich von 40°C bis 2.400°C, vergast wird, wobei entstehendes Gas, insbesondere mit einer Temperatur nicht oberhalb von 600°C, dem Vergaserofen entnommen und der Fallstromeinrichtung zugeführt, in der Fallstromeinrichtung die Temperatur des Gases auf weniger als 100°C gebracht, das derart abgekühlte Gas gegebenenfalls einer Gasreinigungsanlage zugeführt, das Gas in der Gasreinigungsanlage einem Flüssigkeitssprühnebel ausgesetzt, gegebenenfalls das in der Gasreinigungsanlage gereinigte Gas oder das der Fallstromeinrichtung entnommene Gas in einem Verdichter komprimiert und das gegebenenfalls komprimierte Gas einer Brennkammer eines Turbinenmoduls oder einer Brennkraftmaschine zugeführt und darin, vorzugsweise in Gegenwart von Wasserdampf, verbrannt werden und dass die in der Brennkammer oder der Brennkraftmaschine freigesetzte Energie über das Turbinenmodul an einen Generator zur Erzeugung elektrischer Energie weitergegeben wird.

Vorzugsweise wird das Verfahren in der Weise betrieben, dass dem Vergaser- bzw. Kupol-Ofen nur solches Gas entnommen wird, dessen Sauerstoffanteil nicht oberhalb von 5%, vorzugsweise nicht oberhalb von 4% liegt.

In dem Vergaser- bzw. Kupol-Ofen kann die Temperatur oberhalb des Gitterrostes beispielsweise derart gewählt werden, dass diese nicht 1200°C, insbesondere nicht 1100°C übersteigt. Die maximale Temperatur im Vergaserofen wird in der Regel im Bereich der Brenner unterhalb des Gitterrostes erreicht. Sofern erforderlich, kann die Temperatur oberhalb des Gitterrostes auch deutlich über 1100° bzw. 1200°C liegen, beispielsweise um das Verstopfen des Vergaserofens zu vermeiden.

Der vorliegenden Erfindung liegt die überraschende Erkenntnis zugrunde, dass sich vergasbarer Abfall bei Hintereinanderschaltung geeigneter und aufeinander abgestimmte Anlagenkomponenten mit hoher Energieausbeutung verwerten lässt, wobei gleichzeitig ein hohes Maß an Verfahrens- sowie Umweltsicherheit gewährleistet werden kann.

Weitere Vorteile, Merkmale und Anwendungsmöglichkeiten der vorliegenden Erfindung ergeben sich aus der folgenden Beschreibung eines bevorzugten Ausführungsbeispiels in Verbindung mit den anliegenden Zeichnungen. In dieser Zeichnung zeigt
- Figur 1: einen schematischen Aufbau einer erfindungsgemäßen Abfallverwertungsanlage,
- Figur 2: eine schematische Darstellung eines Turbinenmoduls einer erfindungsgemäßen Abfallverwertungsanlage und
- Figur 3: eine schematische Draufsicht auf ein erfindungsgemäßes Abfallverwertungsanlagenmodul.

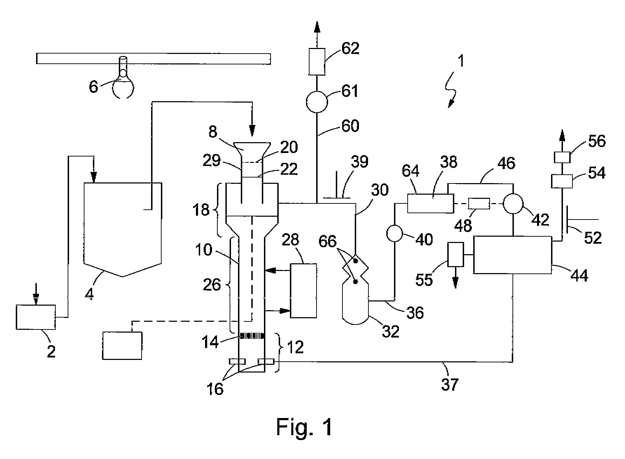

In der in Figur 1 dargestellten Ausführungsform verfügt die Abfallverwertungsanlage 1 über eine Brikettiereinheit 2, der der Abfall zwecks Verdichtung und Portionierung zugeführt werden kann. Der Brikettiereinheit 2 kann auch eine Zerkleinerungsanlage vorgeschaltet sein, um den Brikettiervorgang zu erleichtern. In der dargestellten Verwertungsanlage wird der brikettierte Abfall zunächst einem Vorratsbunker 4 zugeführt, der beispielsweise über eine Aufnahmekapazität von 1000 Tonnen verfügen kann. Der Transport der brikettierten Abfalleinheiten kann entweder über Förderbänder oder mit Hilfe des abgebildeten verfahrbaren Krans 6 vorgenommen werden. Über den Vorratsbehälter 4 gelangt das brikettierte Abfallgut mit Hilfe des Krans 6 über der Befülleinheit 8 in Form eines Einführrohres in den Vergaser- bzw. Kupol-Ofen 10. In der dargestellten Ausführungsform ist der Kupol-Ofen 10 als vertikaler Schachtofen ausgelegt, der im unteren Bereich 12 über ein flüssigkeitsgekühltes Gitterrost 14 sowie mehrere Brennereinheiten 16 verfügt. Mit dem Brenner 16 können im unteren Teil 12 Temperaturen von z.B. 1800 bis 2400°C, geeigneterweise von etwa 2100°C eingestellt werden. Die im oberen Bereich 18 des Kupol-Ofens 10 vorliegende Befülleinheit 8 besitzt zwei vertikal beabstandet voneinander angeordnete Verschlussschieber 20 bis 22, die unabhängig voneinander das Einführrohr 8 schließen und öffnen können und die eine Einführschleuse 24 bilden. Die Verschlussschieber 20 und 22 dienen dazu, im Kupol-Ofen 10 entstehende Verbrennungsgase nicht aus diesem entweichen zu lassen. Ferner soll mit ihrer Hilfe ein Lufteintritt während des Vergaserprozesses in den Kupol-Ofen verhindert werden. In der in Figur 1 dargestellten Ausführungsform einer erfindungsgemäßen Abfallverwertungseinrichtung 1 kann der mittlere Abschnitt 26 über eine Kühleinheit 28 bei Bedarf gekühlt werden. Das im Kupol-Ofen 10 entstehende Verbrennungsgas wird über eine im oberen Abschnitt 18 ansetzende Leitung 30 der Fallstromeinrichtung 32 zugeführt. Der Vergaser- bzw. Kupolofen ist in regulärem Betrieb stets vorzugsweise bis oberhalb des mittleren Abschnitts 26 befüllt (angedeutet durch gestrichelte Linie), d. h. bis in dem verbreiterten oberen Abschnitt 18 hinein. Die in dem dem Kupol-Ofen entnommenen Gas enthaltene hohe Wärmeenergie kann diesem über eine mit der Leitung 30 in Verbindung stehende Wärmeauskopplungseinheit 34 entzogen werden. In die Fallstromeinrichtung 32, in der das noch stets sehr heiße Gasgemisch unter Abkühlung expandiert wird, kann ebenfalls zur weiteren Abkühlung ein Wassernebel eingedüst werden, vorzugsweise entgegengesetzt zur Einspeisrichtung des Gases. Das entspannte, abgekühlte Gasgemisch wird über eine Leitung 36 einer Gasreinigungsanlage 38 zugeführt. Hierfür kann auf eine Lüftereinheit 40 zurückgegriffen werden. Bei der Reinigung des Gasgemisches anfallender Schlamm kann z.B. zur weiteren Verwendung dem Kupol-Ofen wieder zugeführt werden, beispielsweise über separate Leitungen (nicht abgebildet). Soweit bei der Gasreinigung gasförmige Bestandteile in das verwendete Wasser gelangen, kann dieses bei Aufreinigung des Wassers abgefangen und z.B. für den Betrieb des Brenners 16 verwendet werden. Das in der Gasreinigungsanlage 38 gereinigte Gasgemisch wird in der abgebildeten Ausführungsform vor Eintritt in das Turbinenmodul 44 in dem Hochdruckverdichter 42 verdichtet. Das Gasgemisch wird dem Hochdruckverdichter 42 über die Leitung 46 zugeführt. Alternativ kann hier vorgesehen sein, dass das gereinigte Gasgemisch zunächst einem Luftmischer 48 zugeführt wird, bevor es in den Hochdruckverdichter 42 gelangt (gestrichelte Linie).

In einer bevorzugten Ausgestaltung verfügt das Turbinenmodul 44 über eine Brennkammer, einen Wärmetauscher, eine Turbine und einen Kondensator. Hierbei wird in die Brennkammer nicht nur das hochverdichtete Gasgemisch bzw. Luft/Gasgemisch, sondern ebenfalls Wasserdampf über eine entsprechende Düse bzw. einen entsprechenden Einlass eingespeist. Das der Brennkammer entweichende Abgas kann durch Einsatz einer weiteren Wärmeauskopplungseinheit 52 energetisch weiterverwendet werden, bevor es gegebenenfalls einer Aufreinigungseinheit 54 und einem Kondensator 56 über entsprechende Rohrleitungen zugeführt wird. Das in dem Turbinenmodul erzeugte Drehmoment wird über den Generator 58 in elektrischen Strom umgewandelt.

In einer möglichen Ausgestaltung stellt sich das erfindungsgemäße Verfahren zur Verwertung von Abfall mit Hilfe der dargestellten Verwertungsanlage derart dar, dass der Kupol-Ofen 10 darauf eingerichtet ist, etwa 4 bis 5 Tonnen Abfall, vorzugsweise in brikettierter Form, pro Stunde zu vergasen. Hierfür wird mit Hilfe des Brenners 16 im unteren Abschnitt 12 des Kupol-Ofens 10 eine Temperatur von z.B. bis zu 2400°C gehalten. Im mittleren Abschnitt 26 des Kupol-Ofens 10 kann mit Hilfe der Kühleinheit 28 die Ofenwandung gekühlt werden, um auf diese Weise die maximale Temperatur im Ofeninneren zu kontrollieren. Bei laufendem Betrieb des Kupol-Ofens 10 wird bei der dargestellten Variante über den Kran 6 brikettierter Abfall bei geöffnetem oberem Verschlussschieber 20 auf den verschlossenen Verschlussschieber 22 aufgetragen. Anschließend wird der obere Verschlussschieber 20 der Schleuseneinheit 24 verschlossen, woraufhin der untere Verschlussschieber 22 unter Freigabe des zu vergasenden Abfalls geöffnet wird. Die durch den flüssigkeitgekühlten Gitterrost 14 hindurchfallenden Reststoffe, wie Schlacken oder Metalle können dem unteren Teil des Kupol-Ofens 10 entnommen und einer weiteren Verwertung bzw. Deponierung zugeführt werden. Bei der vorliegenden Verfahrungsvariante wird der Kupol-Ofen 10 in der Weise gefahren, dass die bei der Vergasung entstehenden Brenngase im oberen Abschnitt 18 über die oberhalb dem Abfall ansetzende Leitung 30 mit einer Temperatur im Bereich von 400 bis 450°C, beispielsweise 420°C, entnommen werden können. Des weiteren kann eine z.B. ventilgesteuerte Leitung 60 vorgesehen sein, die sich von der das Gas entnehmenden Leitungen 30 abzweigt und dazu dient, bei einem Defekt einzelner Komponenten der Abfallverwertungsanlage das gebildete Gas entweichen zu lassen. Beispielsweise kann an diese Leitung eine Lüftereinheit 61 sowie eine Brennereinheit 62 angeschlossen sein, um durch Verbrennung bei geeignet hohen Temperaturen keine umweltschädlichen Produkte nach außen gelangen zu lassen. Hierbei wird mit Hilfe geeigneter Fahrweise des Ofens dafür Sorge getragen, dass der Sauerstoffgehalt nicht oberhalb von 5 % liegt. Mit Hilfe einer geeigneten Wärmeauskopplungseinheit 34 gelingt es, das Gasgemisch vor Eintritt in die Fallstromeinrichtung 32 auf eine Temperatur im Bereich von 350 bis 400°C, beispielsweise 380°C, herunterzukühlen. In die Expansionsräume der Fallstromeinrichtung wird über geeignete Düsen 66 z.B. Tenside enthaltendes Wasser eingespeist. Das expandierte und gegebenenfalls bereits vorgereinigte Gasgemisch verlässt dann die Fallstromeinrichtung 32 über die Leitung 36 bei einer Temperatur im Bereich von 40 bis 80°C, beispielsweise 60°C, und gelangt in die Gasreinigungsanlage 38. Die Gasreinigungsanlage 38 kann beispielsweise bei Temperaturen im Bereich von 35 bis 60°C, beispielsweise 60°C, betrieben werden. In der dargestellten Ausführungsform kann ebenfalls vorgesehen sein, dass gereinigtes Gas über die Leitung 37 der Gasreinigungsanlage 38 in Anteilen entnommen wird, um den Brennern 16 des Kupol-Ofens 10 zugeführt zu werden. Auf diese Weise ist es möglich, die Abfallverwertungsanlage nach dem Anfahren autark zu betreiben. Das dem Hochdruckverdichter 42 bzw. dem Luftmischer 48 zugeführte gereinigte Gasgemisch besitzt in der Regel noch eine Temperatur im Bereich von 40 bis 55°C, beispielsweise 50°C.

Ein besonderer Vorzug der erfindungsgemäßen Verwertungsanlage 1 ist es, dass die in jeder Verfahrenstufe anfallenden Abfallstoffe, beispielsweise in Form von Schlamm, dem Kupol-Ofen zwecks Weiterverwertung wieder zugeführt werden können. Zudem kann an vielen Stellen der erfindungsgemäßen Anlage Abwärme abgeführt und einer gesonderten Verwertung zugeführt werden, so dass im Ganzen eine äußerst nachhaltige und umweltschonende Abfallverwertung gelingt. Die erfindungsgemäße Abfallverwertungsanlage kann nach dem erstmaligen Anfahren als im wesentlichen geschlossenes System aufgefasst bzw. betrieben werden. Hierdurch ist ein ausgesprochen sicherer Umgang auch und insbesondere mit kontaminiertem Müll und Sondermüll möglich. Ferner ist beispielsweise die Zufuhr von externer Energie in der Regel nicht mehr erforderlich. Auch können auf der Verfahrensstufe anfallende Abfallstoffe wie Schlamm oder Staub der energetischen Verwertung wieder zugeführt werden, sodass letztendlich nur inerte feste Reststoffe verbleiben, beispielsweise inerte Schlacken, Metalle, Metalloxide und/oder in der inerte Schlacke eingeschlossene Metalloxide. Auch diese Reststoffe können einer weiteren Verwertung bzw. Wiederverwendung zugeführt werden. Das durch die erfindungsgemäße Abfallverwertungsanlage zur Verfügung gestellte Gesamtsystem zeichnet sich demgemäß durch äußerste Effizienz und Anlagensicherheit aus. Dieser Punkt kann auch insbesondere noch dadurch unterstützt werden, dass die gesamte Anlage oder Anlagekomponenten in einem Gebäude bzw. Gehäuse untergebracht sind, das im Unterdruck gehalten wird. Auf diese Weise wird vermieden, dass jegliche Stoffe, seien es Gase oder staubförmige Komponenten unkontrolliert in die Umwelt gelangen.

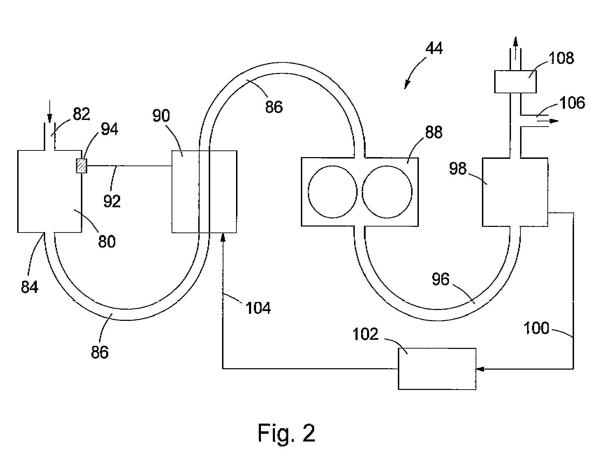

Figur 2 zeigt eine detaillierte schematische Wiedergabe eines bevorzugten Turbinenmoduls 44, wie es in einer Anlage 1, wie in Figur 1 wiedergegeben, zum Einsatz kommen kann. Das Turbinenmodul 44 umfasst eine Brennkammer 80, in die über die Leitung 82 von dem Gasverdichter 42 (nicht abgebildet) und beispielsweise einem separaten Luftverdichter (nicht abgebildet) ein komprimiertes Luft/Gas-Gemisch eingespeist werden kann. In der Brennkammer 80 wird das Luft/Gas-Gemisch gezündet. Die Brennkammer 80 ist vorzugsweise ausgelegt, um Temperaturen bis 3000° standzuhalten. Das expandierende Verbrennungsabgas wird über den Auslass 84 der Brennkammer 80 und die Leitung 86 der Turbine 88, bei der es sich beispielsweise um eine Verdränger-Rotationsturbine handeln kann, zugeführt. Die in dem Verbrennungsabgas vorliegende Wärmeenergie wird über den Wärmetauscher 90 dazu genutzt, Wasser in Wasserdampf umzuwandeln, welcher sodann über die Zuleitung 92 und die Anlage zum Einspeisen von Wasserdampf 94 in die Brennkammer 80 gelangt. Die die Turbine 88 über die Leitung 96 verlassenden Verbrennungsabgase werden in dem Kondensator 98 von Wasserresten befreit. Die im Kondensator 98 anfallenden Wassermengen können über eine Leitung 100 einer Wasseraufbereitungsanlage 102 zugeführt werden, welche wiederum in einer bevorzugten Ausgestaltung als Reservoir für die Einspeisung von Wasser über die Leitung 104 in den Wärmetauscher 90 dienen kann. In der dargestellten Ausführungsform kann das Turbinenmodul 44 ebenfalls mit einer Ableitung 106 ausgestattet sein, über die die Verbrennungsabgase zumindest teilweise den Brennern des Vergaserofens zugeführt werden können. Schließlich kann in einer Ausgestaltung das den Kondensator 98 durchlaufende Verbrennungsgas einer Abgasreinigungseinheit 108 zugeführt werden.

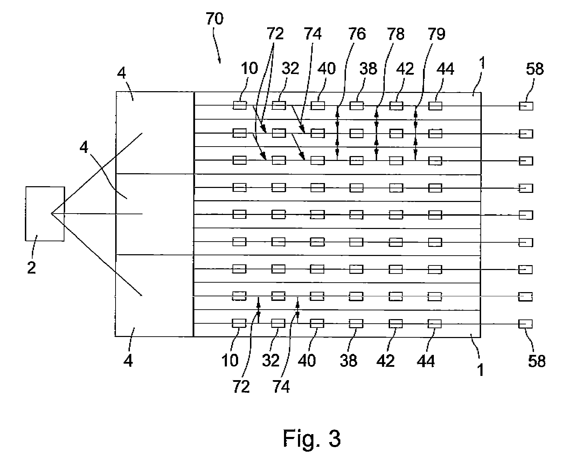

Figur 3 zeigt ein erfindungsgemäßes Abfallverwertungsanlagenmodul 70 umfassend insgesamt neun erfindungsgemäße Abfallverwertungsanlagen bzw. Anlagenlinien 1. Jede Anlage bzw. Anlagenlinie 1 ist mit einem Vergaserofen, beispielsweise Kupol-Ofen 10, einer Fallstromeinrichtung und/oder Quentsch 32, einer Lüftereinheit 40, einer Gasreinigungsanlage 38, einem Gas- bzw. Luft/Gasverdichter 42, einem Turbinenmodul 44 sowie einem Generator 58 ausgestattet. Selbstverständlich sind die Anlagen bzw. Anlagenlinien 1 in der Figur 3 nur schematisch wiedergegeben und können z.B. über sämtliche Details verfügen, wie sie zu der Ausführungsform gemäß Figur 1 beschrieben sind. Beispielsweise, wie in Figur 3 dargestellt, können jeweils drei Anlagen bzw. Anlagenlinien 1 über einen Vorratsbunker 4 mit Abfall in brikettierter Form versorgt werden. Dieser Abfall wird über geeignete Kranvorrichtungen oder sonstige geeignete Einspeisvorrichtungen den Vergaser- bzw. Kupol-Öfen 10 zugeführt (nicht abgebildet). Die Vorratsbunker 4 werden über die Brikettiereinheit 2 jeweils mit brikettiertem Abfallmaterial befüllt. Selbstverständlich ist es ebenfalls möglich, dass eine Anlage bzw. eine Anlagenlinie nicht mit einem separaten Generator 58 ausgestattet ist, sondern dass zwei oder mehrere Anlagen bzw. Anlagenlinien das erzeugte Drehmoment an einen einzigen Generator 58 abgeben (nicht abgebildet). Ein Vorteil des erfindungsgemäßen Anlagenmoduls 70 besteht darin, dass einzelne Anlagen bzw. Anlagenlinien 1 über geeignete Bypass-Leitungen miteinander verbunden werden können. Beispielsweise kann eine Bypass-Leitung 72 von dem Vergaserofen 10 der ersten Anlagenlinie zu der Fallstromeinrichtung 32 der zweiten Anlagelinie vorgesehen sein. In gleicher Weise kann eine Bypass-Leitung von dem Vergaserofen der zweiten Anlagenlinie zu der Fallstromeinrichtung der ersten Anlagenlinie vorgesehen sein. Geeigneterweise werden diese Leitungen über eine einheitliche Bypass-Leitung bewerkstelligt, die mit geeigneten Ventilen ausgestattet ist. Die Bypass-Leitungen 72 können auch an den Verbindungsleitungen zwischen dem Vergaserofen 10 und der Fallstromeinrichtung 32 einer Anlage 1 angebracht sein, wie in Figur 3 skizziert. Des weiteren ist es möglich, nicht nur zwei Anlagen bzw. Anlagenlinien miteinander über Bypass-Leitungen zu verbinden, sondern mehrere oder sämtliche Anlagen bzw. Anlagenlinien. Weitere Bypass-Leitungen 74 können z.B. vorgesehen sein zwischen der Fallstromeinrichtung 32 einer ersten Anlagenlinie und der Lüftereinheit 40 einer zweiten Anlagenlinie. In gleicher Weise können Bypass-Leitungen 76, 78 bzw. 79 vorliegen, zwischen dem Lüfter 40 einer ersten Anlagenlinie und der Gasreinigungsanlage 38 einer zweiten Anlagenlinie, der Gasreinigungsanlage einer ersten Anlagenlinie und dem Gasverdichter einer zweiten Anlagenlinie bzw. dem Gasverdichter einer ersten Anlagenlinie und dem Turbinenmodul einer zweiten Anlagenlinie. Aus Gründen der Übersichtlichkeit sind die vorangehend genannten Bypass-Leitungen in der in Figur 3 wiedergegebenen schematischen Übersicht eines erfindungsgemäßen Anlagenmoduls 72 nicht für sämtliche Anlagenlinien eingezeichnet worden, können dort gleichwohl in gleicher Weise vorgesehen sein.

Mit den erfindungsgemäßen Anlagenmodulen 70 können auch sehr große Mengen an Abfall kontinuierlich verarbeitet bzw. verwertet werden. Des weiteren ist von Vorteil, dass der Ausfall einzelner Anlagenlinien bzw. von Komponenten einzelner Anlagenlinien die Verwertung nicht nachhaltig beeinträchtigt. Beispielsweise ist es nicht mehr nötig, bei auftretenden Störungen den Vergaserofen vollständig herunterzufahren, was regelmäßig, ebenso wie der Anfahrprozess, mehrere Stunden in Anspruch nimmt.

Die in der vorstehenden Beschreibung, in den Ansprüchen sowie in den Zeichnungen offenbarten Merkmale der Erfindung können sowohl einzeln aus auch in jeder beliebigen Kombination für die Verwirklichung der Erfindung in ihren verschiedenen Ausführungsformen wesentlich sein.

## Patentansprüche

1. Abfallverwertungsanlage zur Erzeugung von elektrischer Energie aus Brenngasen, umfassend mindestens einen Vergaserofen mit einem oberen, mittleren und unteren Abschnitt, in Verbindung oder verbindbar mit diesem mindestens einen Gasverdichter, in Verbindung oder verbindbar mit diesem mindestens ein Turbinenmodul, umfassend mindestens eine Brennkammer und mindestens eine Turbine, und in Verbindung oder verbindbar mit dem Turbinenmodul mindestens einen Generator.

2. Abfallverwertungsanlage nach Anspruch 1, ferner umfassend mindestens eine Fallstromeinrichtung, die einlassseitig mit dem Vergaserofen und auslassseitig, direkt oder indirekt, mit dem Gasverdichter oder mit einer Lüftereinheit oder mit einer Gasreinigungsanlage verbunden oder verbindbar ist.

3. Abfallverwertungsanlage zur Erzeugung von elektrischer Energie aus Brenngasen, umfassend mindestens einen Vergaserofen mit einem oberen, mittleren und unteren Abschnitt, in Verbindung oder verbindbar mit diesem mindestens eine Fallstromeinrichtung, in Verbindung oder verbindbar mit dieser mindestens eine Gasreinigungsanlage, in Verbindung oder verbindbar mit dieser mindestens eine Brennkraftmaschine und in Verbindung oder verbindbar mit dieser mindestens einen Generator.

4. Anlage nach einem der vorangehenden Ansprüche, **dadurch gekennzeichnet, dass** der Vergaserofen einen Kupol- oder Schachtofen darstellt, wobei der Vergaserofen einen oberen Abschnitt und einen sich hieran anschließenden mittleren Abschnitt aufweist, wobei vorzugsweise der Durchmesser des oberen Abschnitts größer ist als jener des mittleren Abschnitts; einen unteren Abschnitt aufweist, der vorzugsweise mit mindestens zwei, insbesondere mindestens drei Brennereinheiten ausgestattet ist; und vorzugsweise mindestens eine, insbesondere mindestens partiell flüssigkeitsgekühlte, Abfallauflagevorrichtung aufweist.

5. Anlage nach einem der vorangehenden Ansprüche, **gekennzeichnet durch** mindestens eine dem Vergaserofen vorgeschaltete Brikettiereinheit und/oder mindestens einen Abfallvorratsspeicher.

6. Anlage nach einem der vorangehenden Ansprüche, **gekennzeichnet durch** mindestens eine zwischen dem Vergaserofen und der Fallstromeinrichtung, dem Vergaserofen und der Gasreinigungsanlage und/oder dem Vergaserofen und dem Gasverdichter vorliegende Wärmeauskopplungseinheit.

7. Anlage nach einem der vorangehenden Ansprüche, **dadurch gekennzeichnet, dass** der Vergaserofen, insbesondere der obere Abschnitt des Vergaserofens, oder eine im oberen Abschnitt des Vergaserofens vorliegende Befülleinheit eine Schleuseneinheit, insbesondere enthaltend mindestens zwei öffnen- und verschließbare Verschlusseinheiten, aufweist.

8. Anlage nach einem der vorangehenden Ansprüche, **gekennzeichnet durch** einen Luftverdichter, eingerichtet und geeignet zur Einspeisung von komprimierter Luft in die Brennkammer und/oder eine Leitung von dem Gasverdichter zu dem Turbinenmodul, insbesondere der Brennkammer.

9. Anlage nach einem der vorangehenden Ansprüche, **dadurch gekennzeichnet, dass** die Gasreinigungsanlage (Variante I) mindestens einen Zyklon zur trockenen Abtrennung fester Bestandteile aus dem dem Vergaserofen entweichenden Brenngasgemisch umfasst, der einlassseitig mit dem Vergaserofen und der auslassseitig direkt oder indirekt mit dem Gasverdichter verbunden oder verbindbar ist, oder dass die Gasreinigungsanlage (Variante II) mindestens einen Walzenwäscher aufweist, insbesondere enthaltend eine Trommel mit einer Vielzahl an Öffnungen, oder dass die Gasreinigungsanlage (Variante III) mindestens eine Sprühdüse zur Erzeugung eines Flüssigkeitsnebels umfasst, wobei die Sprühdüse vorzugsweise ausgelegt und geeignet ist, durchschnittliche Tröpfchengrößen im Bereich von 5 bis 100 µm, insbesondere von 7 bis 70 µm zu erzeugen.

10. Anlage nach einem der vorangehenden Ansprüche, **dadurch gekennzeichnet, dass** das Turbinenmodul eine Verdränger-Rotationsturbine umfasst, wobei vorzugsweise die Verdränger- Rotationsturbine eine Zwei-Kammer-Turbine darstellt, umfassend ein Gehäuse, dessen elliptischer Innenraum durch einen konzentrisch gelagerten Rotor in zwei Radialkammern unterteilt ist und wobei der Rotor mindestens zwei Gruppen, jeweils exzentrisch und radial verschiebbar im Rotor gelagerter und mit dem Rotor rotierender, eine reibungsfreie Dichtung gegenüber der die beiden radialen Kammern begrenzenden Innenraumwandung bewirkenden Rotorschaufeln aufweist und sich in dem mit Ein- und Auslässe versehenen Gehäuse dreht, und wobei der Rotor mit mindestens einer Abtriebswelle verbunden ist.

11. Anlage nach einem der vorangehenden Ansprüche, ferner umfassend mindestens eine mit der Brennkammer verbundene oder verbindbare Einheit zur Einspeisung von Wasserdampf.

12. Abfallverwertungsanlagenmodul, umfassend mindestens zwei Anlagen gemäß einem der vorangehenden Ansprüche.

13. Abfallverwertungsanlagenmodul nach Anspruch 12, **dadurch gekennzeichnet, dass** mindestens zwei Anlagen bzw. Anlagenlinien über mindestens eine Bypass-Leitung verbunden oder verbindbar sind, wobei vorzugsweise mindestens eine erste Bypass-Leitung von dem Vergaserofen einer ersten Anlagenlinie bzw. Anlage zu der Fallstromeinrichtung einer zweiten Anlagenlinie bzw. Anlage, mindestens eine zweite Bypass-Leitung von der Fallstromeinrichtung einer ersten Anlagenlinie bzw. Anlage zu der Gasreinigungsanlage und/oder dem Gasverdichter einer zweiten Anlagenlinie bzw. Anlage, mindestens eine dritte Bypass-Leitung von der Gasreinigungsanlage einer ersten Anlagenlinie bzw. Anlage zu dem Gasverdichter einer zweiten Anlagenlinie bzw. Anlage und/oder mindestens eine vierte Bypass-Leitung von dem Gasverdichter einer ersten Anlagenlinie bzw. Anlage zu dem Turbinenmodul einer zweiten Anlagenlinie bzw. Anlage.

14. Verfahren zur Erzeugung von elektrischer Energie aus Abfall unter Verwendung einer Verwertungsanlage gemäß einem der vorangehenden Ansprüche, **dadurch gekennzeichnet, dass** der Abfall, insbesondere in brikettierter Form, in dem Vergaserofen unter sauerstoffarmen Bedingungen, insbesondere bei Temperaturen im Bereich von 40°C bis 2.400°C, vergast wird, wobei entstehendes Gas, insbesondere mit einer Temperatur nicht oberhalb von 600°C, dem Vergaserofen entnommen und der Fallstromeinrichtung zugeführt, in der Fallstromeinrichtung die Temperatur des Gases auf weniger als 100°C gebracht, das derart abgekühlte Gas gegebenenfalls einer Gasreinigungsanlage zugeführt, das Gas in der Gasreinigungsanlage einem Flüssigkeitssprühnebel ausgesetzt, gegebenenfalls das in der Gasreinigungsanlage gereinigte Gas oder das der Fallstromeinrichtung entnommene Gas in einem Verdichter komprimiert und das gegebenenfalls komprimierte Gas einer Brennkammer eines Turbinenmoduls oder einer Brennkraftmaschine zugeführt und darin, vorzugsweise in Gegenwart von Wasserdampf, verbrannt werden und dass die in der Brennkammer freigesetzte Energie über das Turbinenmodul bzw. die Brennkraftmaschine an einen Generator zur Erzeugung elektrischer Energie weitergegeben wird.

15. Verfahren nach Anspruch 14, **dadurch gekennzeichnet, dass** das dem Vergaserofen entnommene Gas einen Sauerstoffanteil nicht oberhalb von 5% aufweist.
